# EUROPEAN PATENT APPLICATION

(11) **EP 4 567 835 A1**
(43) Date of publication of application: **11.06.2025**
(21) Application number: 22950891.6
(22) Date of filing: 26.10.2022
(51) Int. Cl.: G21C 19/02, G21C 19/19, G21C 19/20, G21C 17/00, G21D 1/02

(54) **REACTOR CORE MEASUREMENT INSTRUMENT GUIDE ASSEMBLY**

(30) Priority: 14.07.2022 CN 202210824796
(71) Applicant: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: CHEN, Qiu ying, Shenzhen, Guangdong 518124 (CN); HUANG, Jian xue, Shenzhen, Guangdong 518124 (CN); RAN, Xiao bing, Shenzhen, Guangdong 518124 (CN); LIU, Yan wu, Shenzhen, Guangdong 518124 (CN); LI, Yue zhong, Shenzhen, Guangdong 518124 (CN); XIAO, Wei, Shenzhen, Guangdong 518124 (CN)
(74) Representative: Greaves Brewster LLP
(86) International application number: PCT/CN2022/127602
(87) International publication number: WO 2024/011781

(57) **Abstract**

The present invention provides a reactor core measurement instrument guide assembly, including a bottom plate (10) arranged in a cavity defined by a top cover of a reactor pressure vessel, wherein an upper side of the bottom plate (10) is provided with instrument guide pipes (100) and instrument guide pipe supporting columns (102) for supporting the instrument guide pipes (100), and rigid sleeves (104) are provided on a lower side of the bottom plate (10); and supporting columns (20) arranged in an upper in-reactor member of a reactor, wherein the support columns (20) are each provided with an accommodating chamber (200) corresponding to the rigid sleeves (104), and the rigid sleeves (104) can vertically move along an axis relative to the upper in-reactor member, so as to be inserted into or pulled out of the corresponding accommodating chamber (200). Compared with the prior art, the reactor core measurement instrument guide assembly of the present invention is provided with the rigid sleeves (104), wherein each of the rigid sleeves (104) has a large diameter and a relatively thick wall, the rigid sleeves (104) has an ideal rigidity. When a reactor core measurement instrument is inserted downwards, the reactor core measurement instrument can be accurately aligned with the support columns (20) in the upper in-reactor member, thereby ensuring that the reactor core measurement instrument can be successfully inserted into the support columns (20) in the upper in-reactor member.

## Description

### FIELD OF THE INVENTION

The present invention generally relates to nuclear power plants and, more particularly, relates to a reactor core measurement instrument guide assembly.

### BACKGROUND OF THE INVENTION

In the nuclear power plants, the reactor is usually provided with a core measurement instrument guide structure located in a cavity defined in the top cover of the reactor pressure vessel. The guide structure can not only provide a guide channel for the core measurement instrument assembly to ensure the reliability of the inserting and pulling out process and the accuracy of the inserting and pulling out position of the core measurement instrument components, but also provide protection for the core measurement instrument assembly, thereby reducing the vibration of the core measurement instrument assembly caused by the impact of the coolant.

The top cover of the pressure vessel is relatively far from the fuel assembly in the core. Due to different distribution position of the fuel assembly, if the instrument guide structure is not set, the core measurement instrument cannot be correctly introduced into the designated position of the core fuel assembly. During the initial installation of the core measurement instrument and the replacement of the core instrument (the extraction of the old instrument and the insertion of the new instrument), the guide structure provides guidance for the core measurement instrument, ensures that the core measurement instrument can be inserted into the designated measuring point position in the core, and the instrument can be pulled out along the guide channel.

The prior art provides a reactor core measurement instrument guide assembly. However, the conventional reactor core measurement instrument guide assembly adopts a telescopic double-layer sleeve structure. The telescopic double-layer sleeve mainly includes telescopic inner and outer double-layer sleeve, two layers of spring sleeves and springs, wherein the telescopic inner sleeve is fixed on a bottom plate via pressing and connecting by fastening members, the inner hole is coupled to the outlet of the instrument guide pipe to form a continuous instrument channel. The outer sleeve can axially slid relative to the inner sleeve. When the instrument is at a low position, the double-layer sleeve is contracted and stored in upper support column of the in-reactor member, and the outer sleeve is pressed downwards by a spring installed in the spring sleeve, to realize the fixation of the lower end the outer sleeve and the support column as well as absorb the vibration of the outer sleeve during operation. When the instrument is pulled out to a high position, the inner sleeve rises together with the frame. When the inner and outer sleeves reach the limit position, the inner sleeve lifts the outer sleeve to rise with the grid frame, so that the core instrument is in a state of full-time guidance and protection. The outer sleeve is always not separated from the upper support column. When the instrument falls back into the core, the double-layer sleeve is telescopically returned to be stored in the support column.

However, the conventional reactor core measurement instrument guide assembly has at least the following disadvantages:
First, there is clearance fit between the double-layer sleeves, and when the instrument is in a high position state, the double-layer sleeves are stretched to the maximum length, the lower end of the sleeve is suspended and swing freely. It is impossible to ensure the axial alignment of the sleeve. There is a risk that it is difficult to insert it back into the support column channel smoothly after being pulled out of the support column by mistake.

Second, the double-layer sleeve achieves the clamping function through the sliding fit of four relatively movable parts, namely, the upper spring sleeve, the lower spring sleeve, the inner sleeve and the outer sleeve, which not only has a complex structure, but also will increase the risk of jam during the operation process due to the relatively movable parts.

In view of the foregoing, what is needed, therefore, is to provide a reactor core measurement instrument guide assembly, which can achieve accurate alignment of the sleeve during inserting and pulling out process.

### SUMMARY OF THE INVENTION

One object of the present invention is to overcome at least one disadvantage in the prior art, and to provide a reactor core measurement instrument guide assembly which can achieve accurate alignment of the sleeve during inserting and pulling out process.

According to one embodiment of the present invention, a reactor core measurement instrument guide assembly includes:
a bottom plate arranged in a cavity defined by a top cover of a reactor pressure vessel, wherein an upper side of the bottom plate is provided with instrument guide pipes and instrument guide pipe supporting columns for supporting the instrument guide pipes, and rigid sleeves are provided on a lower side of the bottom plate; and
supporting columns arranged in an upper in-reactor member of a reactor, wherein the support columns are each provided with an accommodating chamber corresponding to the rigid sleeves, and the rigid sleeves can vertically move along an axis relative to the upper in-reactor member, so as to be inserted into or pulled out of the corresponding accommodating chambers.

According to one aspect of the present invention, the rigid sleeves each is rigidly connected to the bottom plate.

According to one aspect of the present invention, the rigid sleeves each is coupled to the bottom plate through a threaded connection.

According to one aspect of the present invention, the support columns each is provided with an elastic pressing device.

According to one aspect of the present invention, the elastic pressing device includes a terminal plug fixedly arranged inside the accommodating chamber, a guide pole movably inserted into the terminal plug, and a spring sleeved on the guide pole and located between the terminal plug and the guide rod.

According to one aspect of the present invention, the guide pole defines a groove at a top end thereof, and the groove has a shape corresponding to a shape of a terminal end of the grid sleeve.

According to one aspect of the present invention, the rigid sleeve has a diameter of 30mm-60mm.

According to one aspect of the present invention, a sidewall of the rigid sleeve has a thickness of 10mm-25mm.

According to one aspect of the present invention, the bottom plate is located on the upper in-reactor member, and is aligned with the upper in-reactor member via a positioning pin.

According to one aspect of the present invention, the bottom plate is transversely constrained and axially free with respect to the positioning pin, and the positioning pin is fixed to an upper support plate of the upper in-reactor member.

According to one aspect of the present invention, the bottom plate is provided with guide cylinders, the upper in-reactor member is provided with guide rods, and the guide cylinders are aligned with the guide rods.

According to one aspect of the present invention, the bottom plate is provided with a plurality of rigid sleeves, the support columns are correspondingly provided with a plurality of accommodating chambers, and the rigid sleeves are correspondingly accommodated in the accommodating chambers.

Compared with the prior art, the reactor core measurement instrument guide assembly of the present invention is provided with the rigid sleeves, wherein each of the rigid sleeves has a large diameter and a relatively thick wall, the rigid sleeves has an ideal rigidity. When a reactor core measurement instrument is inserted downwards, the reactor core measurement instrument can be accurately aligned with the support columns in the upper in-reactor member, thereby ensuring that the reactor core measurement instrument can be successfully inserted into the support columns in the upper in-reactor member.

### BRIEF DESCRIPTION OF THE DRAWINGS

In order to explain the technical solution of the embodiments of the present invention clearly, a brief introduction to the drawings required in the embodiments will be described as following. It should be understood that the drawings show only some embodiments of the present invention and, therefore, should not be seen as a limitation to the scope of the present invention. To one ordinary skilled in the art, other relevant drawings can also be obtained without creative work on the basis of the drawings.
Fig. 1 depicts a perspective view of a reactor core measurement instrument guide assembly according to one embodiment of the present invention;
Fig. 2 depicts an installation view of the reactor core measurement instrument guide assembly of the present invention and the upper in-reactor member;
Fig. 3 depicts a perspective view of a rigid sleeve in the reactor core measurement instrument guide assembly of the present invention;
Fig. 4 depicts a perspective view of an elastic pressing device in the reactor core measurement instrument guide assembly of the present invention;
Fig. 5 depicts an illustration view of the bottom plate and the upper in-reactor member being aligned in the reactor core measurement instrument guide assembly of the present invention; and
Fig. 6 depicts an illustration view of the centering of guide cylinder and the guide rod of the upper internals in the core measurement instrument guide assembly of the present invention.

### DETAILED DESCRIPTION OF THE INVENTION

The technical solution of the embodiments of the present invention will be described clearly and completely in combination with the drawings. Obviously, the embodiments described are only a part of the embodiments of the present invention, not all embodiments. Therefore, the following detailed description of embodiments of the present invention provided in the attached drawings is not intended to limit the scope of the present invention, but merely represents selected embodiments of the present invention. Based on the embodiments of the present invention, other embodiments obtained by one ordinary skilled in the art without creative work also fall within the scope of the present invention.

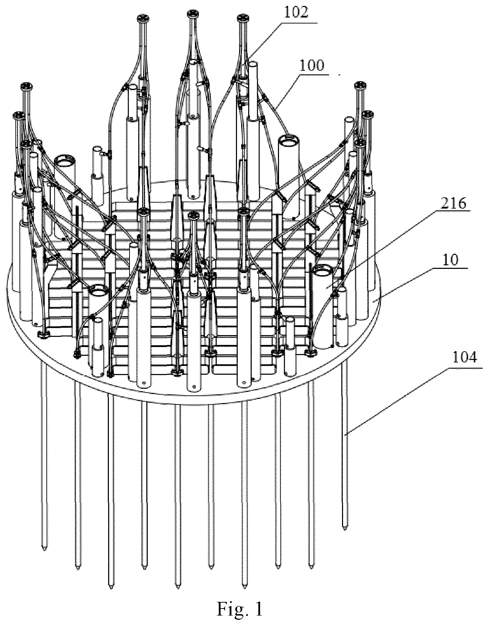

Referring to Figs. 1 to 4, the present invention provides a reactor core measurement instrument guide assembly including:
a bottom plate 10 arranged in a cavity defined by a top cover of a reactor pressure vessel, wherein an upper side of the bottom plate 10 is provided with instrument guide pipes 100 and instrument guide pipe supporting columns 102 for supporting the instrument guide pipes 100, and rigid sleeves 104 are provided on a lower side of the bottom plate 10; and
support columns 20 arranged in an upper in-reactor member of a reactor, wherein the support columns 20 are each provided with an accommodating chamber 200 corresponding to the rigid sleeves 104, and the rigid sleeves 104 can vertically move along an axis relative to the upper in-reactor member, so as to be inserted into or pulled out of the corresponding accommodating chamber 200.

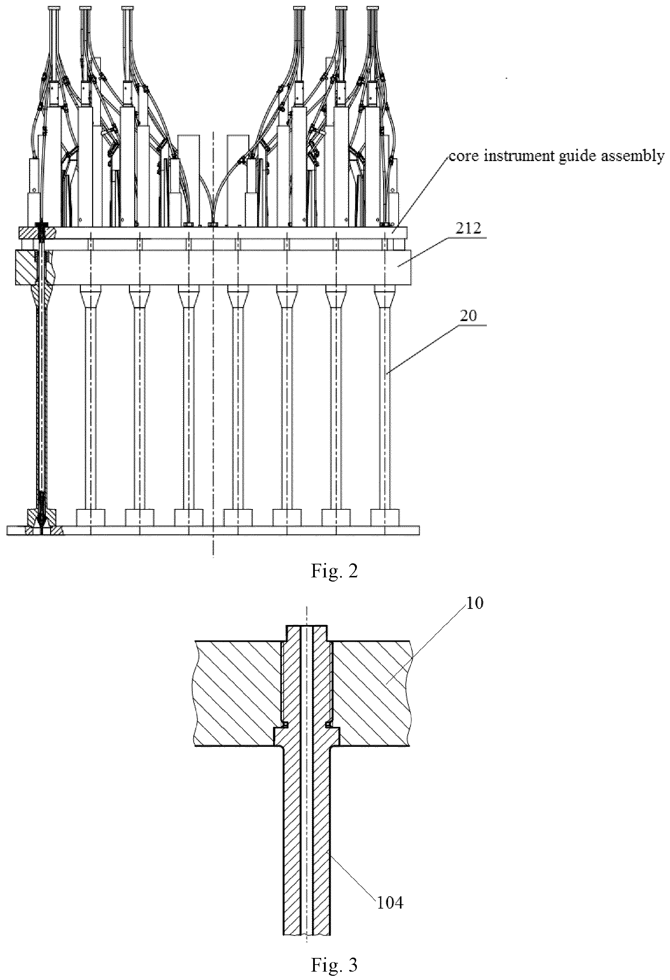

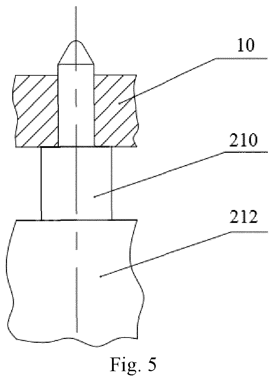

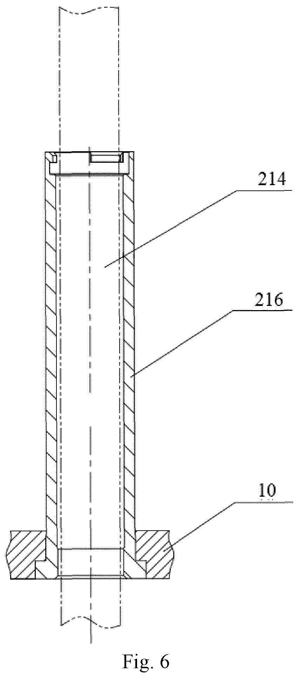

Referring to Figs. 2 to 6, the bottom plate 10 is located on an upper support plate 212 of the upper in-reactor member, and is aligned with the upper in-reactor member as a whole via a positioning pin 210 connected to the upper support plate 212. According to one embodiment of the present invention, the bottom plate 10 is transversely constrained and axially free with respect to the positioning pin 210, and the hole of the support column of the upper in-reactor member connected to the upper support plate 212 is axially aligned with the rigid sleeve 104. Guide cylinders 216 are arranged on the bottom plate 10, the guide cylinders 216 is aligned with the guide rods 214 on the upper in-reactor member, and the guide cylinder 216 can move up and down along the axis of the guide rod 214, to ensure the alignment of the core instrument guide assembly with the upper in-reactor member when the core instrument guide assembly is pulled out or inserted.

Referring specially to Fig. 3, according to one embodiment of the reactor core measurement instrument guide assembly of the present invention, the rigid sleeves 104 each is rigidly connected to the bottom plate 10, for example, the rigid sleeve 104 is coupled to the bottom plate 10 through a threaded connection, so as to strictly control the installation position accuracy of the rigid sleeve 104, and properly be aligned with the instrument channel. In order to improve the rigidity of the rigid sleeve 104, the diameter of the rigid sleeve 104 is 30mm-60mm, and the wall thickness of the rigid sleeve 104 is 10mm-25mm.

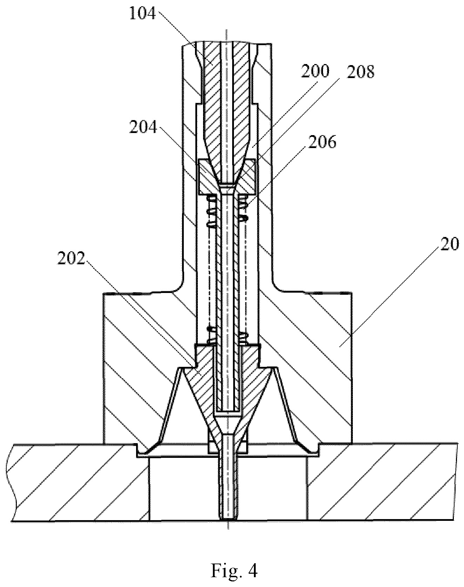

Referring specially to Fig. 4, the support column 20 is provided with an elastic pressing device, the elastic pressing device includes a terminal plug 202 fixedly arranged inside the accommodating chamber 200, a guide pole 204 movably inserted into the terminal plug 20, and a spring 206 sleeved on the guide pole 204 and located between the terminal plug 202 and the guide rod 204. The top of the guide pole 204 is provided with a groove 208, the shape and the size of the groove 208 are adapted to shape and the size of the end of the rigid sleeve 104. During the operation of the reactor, the elastic pressing device can reduce the vibration of the core measuring instrument, thereby reducing the vibration of the core measurement instrument in the channel inside the rigid sleeve 104 due to the influence of the water flow, and protecting the core measurement instrument.

It should be understood that, according to the actual requirements, the bottom plate 10 can be provided with a number of rigid sleeves 104. In this case, a number of accommodating chamber 200 are arranged on the upper support column 20 correspondingly, and the rigid sleeves 104 are correspondingly accommodated in the accommodating chambers 200, so as to achieve simultaneous insertion and extraction of a number of sets of core instruments as a whole.

In view of the detailed description of the embodiments of the present invention, it can be seen that, compared with the prior art, the reactor core measurement instrument assembly of the present invention is provided with the rigid sleeves 104 having a large diameter and a thicker wall, the rigid sleeves 104 each has an ideal rigidity, does not deform or sway, and can be accurately centered with the upper support column 20 of the internals when the core measuring instrument is inserted, so as to ensure that the core measurement instrument can smoothly inserted into the support column 20.

In addition, an elastic pressing device is arranged in the support column 20 of the upper in-reactor member for fixing a lower end of the rigid sleeve 104, so that the vibration of core measurement instruments in the channel of the rigid sleeve 104 due to the influence of the water flow can be reduced. The elastic pressing device and the core measurement instrument are interface components, which can significantly simplify the overall structure of the core instrument assembly and facilitate the manufacture and installation.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A reactor core measurement instrument guide assembly, **characterized in that**, the reactor core measurement instrument guide assembly comprises:
a bottom plate (10) arranged in a cavity defined by a top cover of a reactor pressure vessel, wherein an upper side of the bottom plate (10) is provided with instrument guide pipes (100) and instrument guide pipe supporting columns (102) for supporting the instrument guide pipes (100), and rigid sleeves (104) are provided on a lower side of the bottom plate (10); and
supporting columns (20) arranged in an upper in-reactor member of a reactor, wherein the support columns (20) are each provided with an accommodating chamber (200) corresponding to the rigid sleeves (104), and the rigid sleeves (104) can vertically move along an axis relative to the upper in-reactor member, so as to be inserted into or pulled out of the corresponding accommodating chambers (200).

2. The reactor core measurement instrument guide assembly of claim 1, **characterized in that**, the rigid sleeves (104) each is rigidly connected to the bottom plate (10).

3. The reactor core measurement instrument guide assembly of claim 2, **characterized in that**, the rigid sleeves (104) each is coupled to the bottom plate (10) through a threaded connection.

4. The reactor core measurement instrument guide assembly of claim 1, **characterized in that**, the support columns (20) each is provided with an elastic pressing device.

5. The reactor core measurement instrument guide assembly of claim 4, **characterized in that**, the elastic pressing device comprises a terminal plug (202) fixedly arranged inside the accommodating chamber (200), a guide pole (204) movably inserted into the terminal plug (20), and a spring (206) sleeved on the guide pole (204) and located between the terminal plug (202) and the guide rod (204).

6. The reactor core measurement instrument guide assembly of claim 5, **characterized in that**, the guide pole (204) defines a groove (208) at a top end thereof, and the groove (208) has a shape corresponding to a shape of a terminal end of the grid sleeve (104).

7. The reactor core measurement instrument guide assembly of claim 1, **characterized in that**, the rigid sleeve (104) has a diameter of 30mm-60mm.

8. The reactor core measurement instrument guide assembly of claim 1, **characterized in that**, a sidewall of the rigid sleeve (104) has a thickness of 10mm-25mm.

9. The reactor core measurement instrument guide assembly of claim 1, **characterized in that**, the bottom plate (10) is located on the upper in-reactor member, and is aligned with the upper in-reactor member via a positioning pin (210).

10. The reactor core measurement instrument guide assembly of claim 9, **characterized in that**, the bottom plate (10) is transversely constrained and axially free with respect to the positioning pin (210), and the positioning pin (210) is fixed to an upper support plate (212) of the upper in-reactor member.

11. The reactor core measurement instrument guide assembly of claim 1, **characterized in that**, the bottom plate (10) is provided with guide cylinders (216), the upper in-reactor member is provided with guide rods (214), and the guide cylinders (216) are aligned with the guide rods (214).

12. The reactor core measurement instrument guide assembly of any one of claims 1 to 11, **characterized in that**, the bottom plate (10) is provided with a plurality of rigid sleeves (104), the support columns (20) are correspondingly provided with a plurality of accommodating chambers (200), and the rigid sleeves (104) are accommodated in the corresponding accommodating chambers (200).
